# EUROPÄISCHE PATENTSCHRIFT

(11) **EP 3 304 846 B1**
(45) Veröffentlichungstag und Bekanntmachung des Hinweises auf die Patenterteilung: **15.07.2020**
(21) Anmeldenummer: 16724356.7
(22) Anmeldetag: 17.05.2016
(51) Int. Cl.: H04L 29/06, H04L 9/32, G06Q 20/40

(54) **IDENTIFIKATION EINER PERSON AUF DER BASIS EINES TRANSFORMIERTEN BIOMETRISCHEN REFERENZMERKMALS**
IDENTIFICATION OF A PERSON ON THE BASIS OF A TRANSFORMED BIOMETRIC REFERENCE FEATURE
IDENTIFICATION D'UNE PERSONNE SUR LA BASE D'UNE CARACTÉRISTIQUE BIOMÉTRIQUE DE RÉFÉRENCE TRANSFORMÉE

(30) Priorität: 27.05.2015 DE 102015108351
(43) Veröffentlichungstag der Anmeldung: 11.04.2018
(73) Patentinhaber: Bundesdruckerei GmbH, 10969 Berlin (DE)
(72) Erfinder: WOLF, Andreas, 13158 Berlin (DE); PAESCHKE, Manfred, 16348 Wandlitz (DE); FRITZE, Frank, 12437 Berlin (DE)
(74) Vertreter: Patentship Patentanwaltsgesellschaft mbH
(86) Internationale Anmeldenummer: PCT/EP2016/060953
(87) Internationale Veröffentlichungsnummer: WO 2016/188785

(56) Entgegenhaltungen:
- WO-A2-02/095657
- US-A1- 2010 205 660
- US-A1- 2014 095 884
- "Information technology -- Security techniques â Biometric information protection Project: 1.27.45 (24745);SC 27 N8158", ITU-T DRAFT ; STUDY PERIOD 2009-2012, INTERNATIONAL TELECOMMUNICATION UNION, GENEVA ; CH, Bd. Study Group 17, 8. Oktober 2010 (2010-10-08), Seiten 1-63, XP017455337, [gefunden am 2010-10-08]

## Beschreibung

Die vorliegende Erfindung betrifft das Gebiet der Identifikation einer Person.

Die Offenlegungsschrift US 2014/095884 A1 offenbart ein biometrisches Authentifizierungssystem, welches Teil einer Computervorrichtung ist. Die Computervorrichtung umfasst unter anderem biometrische Sensoren zum Erfassen eines biometrischen Merkmals eines Nutzers.

Der Artikel "Information technology - Security techniques ä Biometrie information protection Project: 1.27.45 (24745); SC 27 N8158", ITU-T DRAFT; STUDY PERIOD 2009-2012, INTERNATIONAL TELECOMMUNICATION UNION, GENEVA, CH, Bd. Study Group 17, 8. Oktober 2010 (2010-10-08), Seiten 1-63, XP017455337, [gefunden am 2010-10-08])" offenbart ein Speichern und ein Vergleichen von biometrischen Merkmalen auf einem Server.

Die Offenlegungsschrift US 2010/205660 A1 offenbart ein System und ein Verfahren zum Aufzeichnen einer Erzeugung eines löschbaren biometrischen Referenztemplates.

Die Offenlegungsschrift WO 02/095657 A2 offenbart anwendungsspezifische biometrische Templates.

Zur Identifikation einer Person wird häufig ein biometrisches Merkmal der Person erfasst und an einen Identifikationsserver übermittelt. Hierbei vergleicht der Identifikationsserver ansprechend auf Empfang des biometrischen Merkmals der Person das empfangene biometrische Merkmal der Person mit einem biometrischen Referenzmerkmal der Person, um die Person zu identifizieren. Hierbei kann die Identifikation der Person jedoch auch ohne Zustimmung und ohne Wissen der Person durchgeführt werden, wodurch ein Datenschutz reduziert sein kann.

Es ist daher die Aufgabe der vorliegenden Erfindung, ein Konzept zur Identifikation einer Person mit einem verbesserten Datenschutz zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt betrifft die Erfindung einen Identifikationsserver zur Identifikation einer zu identifizierenden Person, mit: einem Speicher zum Bereitstellen einer Mehrzahl von Personendatensätzen, welche unterschiedlichen Personen zugeordnet sind, wobei jeder Personendatensatz ein mittels einer personifizierten Transformationsvorschrift transformiertes biometrisches Referenzmerkmal einer Person umfasst; einer Kommunikationsschnittstelle zum Empfangen einer Personenkennung über ein Kommunikationsnetzwerk, wobei die Personenkennung der zu identifizierenden Person zugeordnet ist; und einem Prozessor, welcher ausgebildet ist, anhand der empfangenen Personenkennung einen Hinweis auf die personifizierte Transformationsvorschrift, welche der zu identifizierenden Person zugeordnet ist, aus dem Speicher auszulesen; wobei die Kommunikationsschnittstelle ausgebildet ist, eine Aufforderung zur Übermittlung eines mittels der personifizierten Transformationsvorschrift transformierten biometrischen Merkmals der zu identifizierenden Person über das Kommunikationsnetzwerk auszusenden, wobei die Aufforderung den Hinweis auf die personifizierte Transformationsvorschrift umfasst, wobei die Kommunikationsschnittstelle ferner ausgebildet ist, das transformierte biometrische Merkmal der zu identifizierenden Person über das Kommunikationsnetzwerk zu empfangen; und wobei der Prozessor ausgebildet ist, das empfangene transformierte biometrische Merkmal mit dem transformierten biometrischen Referenzmerkmal zu vergleichen, um die zu identifizierende Person zu identifizieren. Dadurch wird der Vorteil erreicht, dass ein Datenschutz bei der Identifikation der zu identifizierenden Person erhöht werden kann, da eine Identifikation der zu identifizierenden Person nur bei Kenntnis der personifizierten Transformationsvorschrift durchgeführt werden kann.

Der Identifikationsserver kann ein Computer sein, auf welchem ein elektronischer Identifikationsdienst ausgeführt wird.

Die Mehrzahl der Personendatensätze kann in Form einer Datenbank in dem Speicher gespeichert sein.

Die personifizierte Transformationsvorschrift kann eine asymmetrische Verschlüsselung, eine digitale Signierung, eine digitale Codierungsvorschrift, eine Scrambling-Vorschrift, eine digitale Modulationsvorschrift oder eine Template Protection Transformationsvorschrift sein.

Das biometrische Referenzmerkmal kann ein oder mehrere Fingerabdrücke, ein Handvenenmuster, ein Stimmmuster, ein Gesichtsbild oder ein oder zwei Irisabbilder eines oder zweier Augen der zu identifizierenden Person sein. Beispielsweise wird das biometrische Referenzmerkmal der zu identifizierbaren Person in einer betraubaren Umgebung, wie in einer Geschäftsstelle eines Betreibers des Identifikationsservers oder in einem Passamt in einem Bürgerbüro, erfasst. Im Anschluss an das Erfassen wird das erfasste biometrische Referenzmerkmal mittels der personifizierten Transformationsvorschrift transformiert und wird das transformierte biometrische Referenzmerkmal an den Identifikationsserver übermittelt. Ferner kann das erfasste biometrische Referenzmerkmal im Anschluss an das Erfassen mittels der personifizierten Transformationsvorschrift transformiert, das transformierte biometrische Referenzmerkmal in einem der zu identifizierenden Person zugeordneten Speicherelement, wie einer Smartcard, gespeichert und das gespeicherte transformierte biometrische Referenzmerkmal zu einem späteren Zeitpunkt an den Identifikationsserver übermittelt werden.

Das transformierte biometrische Merkmal kann ein mittels einer Identifikationsvorrichtung erfasstes biometrisches Merkmal, wie ein Fingerabdruck, ein Handvenenmuster, ein Stimmmuster, ein Gesichtsbild oder ein Irisabbild eines Auges der zu identifizierenden Person sein, welches anhand der personifizierten Transformationsvorschrift transformiert wurde.

Die Kommunikationsschnittstelle kann eine Local Area Network (LAN) Kommunikationsschnittstelle oder eine Wireless Local Area Network (W-LAN) Kommunikationsschnittstelle umfassen. Ferner kann die Kommunikationsschnittstelle zur verschlüsselten Kommunikation gemäß dem Standard Secure Sockets Layer / Transport Layer Security (SSL/TLS) ausgebildet sein. Die Kommunikationsschnittstelle kann ferner zur digitalen Signierung von zu übermittelnden Daten ausgebildet sein. Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Die Personenkennung kann ein Personendatum, wie ein Name oder ein Vorname, oder ein Benutzername der zu identifizierenden Person sein. Ferner kann der Hinweis auf die personifizierte Transformationsvorschrift eine Bezeichnung der Transformationsvorschrift umfassen.

Der Prozessor kann ausgebildet sein, basierend auf dem Vergleich des empfangenen transformierten biometrischen Merkmals mit dem transformierten biometrischen Referenzmerkmals ein Vergleichsmaß zu bestimmen. Erreicht oder überschreitet das Vergleichsmaß einen vorbestimmten Schwellwert, so kann die zu identifizierende Person als die Person identifiziert werden, der das transformierte biometrische Referenzmerkmal zugeordnet ist.

Die zu identifizierende Person kann ein Benutzerkonto bei einem Dienstanbieter, wie einem Internetshop-Dienstanbieter oder einem Onlinebanking-Dienstanbieter, besitzen. Um ihre Identität gegenüber dem Dienstanbieter nachweisen zu können, kann die zu identifizierende Person in dem Benutzerkonto Zugangsdaten oder Credentials für die Identifikation mittels des Identifikationsservers hinterlegen. Um die zu identifizierende Person zu identifizieren kann ein Dienstserver des Dienstanbieters gegenüber dem Identifikationsserver eine Identifikation oder eine Identitätsprüfung der zu identifizierenden Person begehren. Hierzu kann der Dienstserver dem Identifikationsserver die Personenkennung übermitteln. Ferner kann der Dienstserver seinen Anspruch auf die Identifikation der zu identifizierenden Person gegenüber dem Identifikationsserver mittels der Credentials nachweisen. Daraufhin kann der Prozessor des Identifikationsservers den Hinweis auf die personifizierte Transformationsvorschrift aus dem Speicher des Identifikationsservers auslesen und kann die Kommunikationsschnittstelle die Aufforderung zur Übermittlung des mittels der personifizierten Transformationsvorschrift transformierten biometrischen Merkmals der zu identifizierenden Person über das Kommunikationsnetzwerk an die zu identifizierende Person oder an eine der zu identifizierenden Person zugeordneten Identifikationsvorrichtung aussenden. Die zu identifizierende Person kann daraufhin, beispielsweise mittels der der zu identifizierenden Person zugeordneten Identifikationsvorrichtung, das transformierte biometrische Merkmal erzeugen und an die Kommunikationsschnittstelle des Identifikationsservers über das Kommunikationsnetzwerk übermitteln. Der Prozessor kann anschließend das empfangene transformierte biometrische Merkmal mit dem transformierten biometrischen Referenzmerkmal vergleichen, um die zu identifizierende Person zu identifizieren. Ferner kann der Identifikationsserver ausgebildet sein, ein Ergebnis des Vergleichs an den Dienstserver, beispielsweise mittels der Kommunikationsschnittstelle über das Kommunikationsnetzwerk, zu übermitteln. Beispielsweise bestätigt der Identifikationsserver dem Dienstserver die Identität der zu identifizierenden Person. Um eine zukünftige Identifikation der zu identifizierenden Person zu verhindern, kann die zu identifizierende Person die personifizierte Transformationsvorschrift, beispielsweise aus einem Speicher der der zu identifizierenden Person zugeordneten Identifikationsvorrichtung, löschen. Hierdurch kann eine Revozierung des in dem Speicher des Identifikationsservers gespeicherten transformierten biometrischen Referenzmerkmals erreicht werden. Gemäß einer Ausführungsform können der Identifikationsserver und der Dienstserver durch einen einzigen Server gebildet sein.

Gemäß einer Ausführungsform ist die Kommunikationsschnittstelle ferner ausgebildet, ansprechend auf das Aussenden der Aufforderung das transformierte biometrische Merkmal der zu identifizierenden Person über das Kommunikationsnetzwerk zu empfangen.

Gemäß einer weiteren Ausführungsform sind das transformierte biometrische Referenzmerkmal und das transformierte biometrische Merkmal der zu identifizierenden Person unterschiedlich.

Gemäß einer weiteren Ausführungsform sind das transformierte biometrische Merkmal und das nichttransformierte biometrische Merkmal der zu identifizierenden Person unterschiedlich.

Gemäß einer weiteren Ausführungsform sind das transformierte biometrische Referenzmerkmal und das nichttransformierte biometrische Referenzmerkmal der zu identifizierenden Person unterschiedlich.

Gemäß einer weiteren Ausführungsform ist der Hinweis auf die personifizierte Transformationsvorschrift die personifizierte Transformationsvorschrift oder ausschließlich eine Bezeichnung der Transformationsvorschrift. Dadurch wird der Vorteil erreicht, dass ein eindeutiger Hinweis auf die personifizierte Transformationsvorschrift übermittelt werden kann.

Gemäß einer weiteren Ausführungsform ist die personifizierte Transformationsvorschrift, welche der zu identifizierenden Person zugeordnet ist, eine der folgenden Transformationsvorschriften: asymmetrische Verschlüsselung unter Verwendung eines kryptografischen Schlüssels, welcher der zu identifizierenden Person zugeordnet ist, digitale Signierung unter Verwendung eines kryptographischen Signaturschlüssels, welcher der zu identifizierenden Person zugeordnet ist, eine digitale Codierungsvorschrift, insbesondere ein digitaler Code, wie ein RS-Code oder ein Huffmann-Code, welcher der zu identifizierenden Person zugeordnet ist, eine Scrambling-Vorschrift, eine digitale Modulationsvorschrift, welche der zu identifizierenden Person zugeordnet ist, oder eine Template Protection Transformationsvorschrift. Dadurch wird der Vorteil erreicht, dass eine Rückgewinnung des biometrischen Merkmals aus dem transformierten biometrischen Merkmal verhindert werden kann, um den Datenschutz weiter zu erhöhen.

Die asymmetrische Verschlüsselung kann unter Verwendung eines Public-Key-Verschlüsselungsverfahrens durchgeführt werden. Ferner kann der RS-Code ein Reed-Solomon-Code sein. Die Template Protection Transformationsvorschrift kann ferner eine Biometrie Template Protection Transformationsvorschrift gemäß dem Standard ISO 24745 sein.

Erfindungsgemäß ist jedes transformierte biometrische Referenzmerkmal der jeweiligen Person und jeweils zumindest einem Dienstanbieter zugeordnet. Dadurch wird der Vorteil erreicht, dass die zu identifizierende Person dienstanbieterbezogen identifiziert werden kann.

Gemäß einer weiteren Ausführungsform umfasst jeder Personendatensatz eine Anzahl von transformierten biometrischen Referenzmerkmalen, welche derselben Person und unterschiedlichen Dienstanbietern zugeordnet sind, wobei jedes transformierte biometrische Referenzmerkmal der Anzahl der transformierten biometrischen Referenzmerkmale einem Dienstanbieter einer Anzahl von Dienstanbietern zugeordnet ist. Dadurch wird der Vorteil erreicht, dass mehrere Dienstanbieter den Identifikationsserver zur Identifikation einer zu identifizierenden Person verwenden können.

Gemäß einer weiteren Ausführungsform geht jedes transformierte biometrische Referenzmerkmal der Anzahl der transformierten biometrischen Referenzmerkmale aus einer Transformation eines biometrischen Referenzmerkmals der Person mittels einer Transformationsvorschrift hervor, welche der Person und einem Dienstanbieter, insbesondere genau einem Dienstanbieter, zugeordnet ist. Dadurch wird der Vorteil erreicht, dass das transformierte biometrische Referenzmerkmal dienstanbieterabhängig revoziert werden kann.

Erfindungsgemäß ist die Kommunikationsschnittstelle ausgebildet, die Personenkennung und eine Dienstanbieterkennung zu empfangen, wobei die Dienstanbieterkennung einem Dienstanbieter zugeordnet ist; ist der Prozessor ausgebildet, anhand der empfangenen Personenkennung und der Dienstanbieterkennung einen Hinweis auf die personifizierte Transformationsvorschrift, welche der zu identifizierenden Person und dem Dienstanbieter zugeordnet ist, aus dem Speicher auszulesen; ist die Kommunikationsschnittstelle ausgebildet, eine Aufforderung zur Übermittlung eines mittels der personifizierten und dem Dienstanbieter zugeordneten Transformationsvorschrift transformierten biometrischen Merkmals der zu identifizierenden Person über das Kommunikationsnetzwerk auszusenden, wobei die Aufforderung den Hinweis auf die personifizierte Transformationsvorschrift und einen Hinweis auf den Dienstanbieter umfasst, wobei die Kommunikationsschnittstelle ferner ausgebildet ist, das transformierte biometrische Merkmal der zu identifizierenden Person über das Kommunikationsnetzwerk zu empfangen; und ist der Prozessor ausgebildet, das empfangene transformierte biometrische Merkmal mit dem transformierten biometrischen Referenzmerkmal zu vergleichen, das der Person und dem Dienstanbieter zugeordnet ist, um die zu identifizierende Person dienstanbieterbezogen zu identifizieren. Dadurch wird der Vorteil erreicht, dass die zu identifizierende Person effizienter dienstanbieterbezogen identifiziert werden kann. Die Dienstanbieterkennung kann in den Credentials umfasst sein.

Gemäß einer weiteren Ausführungsform ist der Prozessor ausgebildet, bei einer Übereinstimmung des empfangenen transformierten biometrischen Merkmals mit dem transformierten biometrischen Referenzmerkmal die Kommunikationsschnittstelle zum Aussenden eines Identifikationssignals, das eine Identifikation der zu identifizierenden Person anzeigt, über das Kommunikationsnetzwerk, insbesondere an einen Dienstserver eines Dienstanbieters, anzuweisen, oder ist der Prozessor ausgebildet, bei einer Übereinstimmung des empfangenen transformierten biometrischen Merkmals mit dem transformierten biometrischen Referenzmerkmal einen elektronischen Dienst auszuführen. Dadurch wird der Vorteil erreicht, dass die Identität der zu identifizierenden Person bestätigt werden kann.

Gemäß einer weiteren Ausführungsform ist der Identifikationsserver ein eID-Server oder ein Dienstserver eines Dienstanbieters. Der eID-Server kann ein Server zur elektronischen Identifizierung sein.

Gemäß einem zweiten Aspekt betrifft die Erfindung eine Identifikationsvorrichtung zur Identifizierung einer zu identifizierenden Person gegenüber einem Dienstanbieter unter Verwendung eines biometrischen Merkmals der zu identifizierenden Person, mit: einer Kommunikationsschnittstelle, welche ausgebildet ist, eine Dienstanbieterkennung des Dienstanbieters zu empfangen; einem Speicher, welcher ausgebildet ist, eine Mehrzahl von personifizierten Transformationsvorschriften bereitzustellen, welche der zu identifizierenden Person und unterschiedlichen Dienstanbietern zugeordnet sind, wobei jede personifizierte Transformationsvorschrift eine Dienstanbieter spezifische Transformation des biometrischen Merkmals bewirkt; und einem Prozessor, welcher ausgebildet ist, eine dem Dienstanbieter zugeordnete und personifizierte Transformationsvorschrift aus dem Speicher auszulesen und das biometrische Merkmal der zu identifizierenden Person mittels der ausgelesenen Transformationsvorschrift in ein transformiertes biometrisches Merkmal der Person zu transformieren; wobei die Kommunikationsschnittstelle ausgebildet ist, das transformierte biometrische Merkmal auszugeben. Dadurch wird der Vorteil erreicht, dass die zu identifizierenden Person mittels des erfindungsgemäßen Identifikationsservers effizient identifiziert werden kann.

Das biometrische Merkmal kann ein Fingerabdruck, ein Handvenenmuster, ein Stimmmuster, ein Gesichtsbild oder ein Irisabbild eines Auges der zu identifizierenden Person sein. Ferner können die personifizierten Transformationsvorschriften der Mehrzahl der personifizierten Transformationsvorschriften Vorschriften zur asymmetrischen Verschlüsselung, Vorschriften zur digitalen Signierung, digitale Codierungsvorschriften, Scrambling-Vorschriften, digitale Modulationsvorschriften oder Template Protection Transformationsvorschriften sein.

Die Identifikationsvorrichtung kann ein Computer, ein Terminal, ein Kommunikationsgerät, ein Telefon, insbesondere ein Mobiltelefon oder ein Smartphone, oder ein Identifikationsdokument mit einem elektronischen Chip sein, wobei der elektronische Chip die Kommunikationsschnittstelle, den Speicher und den Prozessor implementiert.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die Kommunikationsschnittstelle kann eine Local Area Network (LAN) Kommunikationsschnittstelle, eine Wireless Local Area Network (W-LAN) Kommunikationsschnittstelle, eine Nahfeldkommunikationsschnittstelle, eine Radiofrequenzidentifikations-Kommunikationsschnittstelle und/oder eine Mobilfunkschnittstelle umfassen.

Gemäß einer Ausführungsform ist der Prozessor ferner ausgebildet, das biometrische Merkmal der zu identifizierenden Person mittels der ausgelesenen Transformationsvorschrift und mittels einer Kennung in ein transformiertes biometrisches Merkmal der Person zu transformieren. Dadurch wird der Vorteil erreicht, dass die Identifikation der zu identifizierenden Person nur mit Kenntnis der Kennung durchgeführt werden kann. Die Identifikationsvorrichtung kann eine Benutzerschnittstelle zur Eingabe der Kennung durch die zu identifizierende Person aufweisen. Ferner kann die Kennung in dem Speicher der Identifikationsvorrichtung vorgespeichert sein. Die Kennung kann ferner ein der zu identifizierenden Person zugeordnetes Datum sein.

Gemäß einer weiteren Ausführungsform ist die Kommunikationsschnittstelle ausgebildet, das biometrische Merkmal zu empfangen, oder weist die Identifikationsvorrichtung eine weitere Kommunikationsschnittstelle zum Empfangen des biometrischen Merkmals auf oder umfasst die Identifikationsvorrichtung eine biometrische Erfassungseinrichtung zum Erfassen des biometrischen Merkmals. Dadurch wird der Vorteil erreicht, dass das biometrische Merkmal effizient bereitgestellt werden kann. Die Erfassungseinrichtung kann eine Bildkamera, eine Videokamera, ein Mikrofon, einen Fingerabdrucksensor und/oder einen Sensor zum Erfassen eines Handvenenmusters umfassen.

Erfindungsgemäß ist die Kommunikationsschnittstelle ausgebildet, das transformierte biometrische Merkmal über ein Kommunikationsnetzwerk auszusenden. Dadurch wird der Vorteil erreicht, dass das transformierte biometrische Merkmal effizient an den erfindungsgemäßen Identifikationsserver übermittelt werden kann. Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Gemäß einer weiteren Ausführungsform ist die Identifikationsvorrichtung ein Smartphone oder ist die Identifikationsvorrichtung ein Identifikationsdokument mit einem elektronischen Chip, wobei der elektronische Chip die Kommunikationsschnittstelle, den Speicher und den Prozessor implementiert. Dadurch wird der Vorteil erreicht, dass Identifikationsvorrichtung besonders kompakt ausgeführt werden kann.

Gemäß einem dritten Aspekt betrifft die Erfindung ein Verfahren zur Identifikation einer zu identifizierenden Person mittels eines Identifikationsservers, wobei der Identifikationsserver eine Mehrzahl von Personendatensätzen bereitstellt, welche unterschiedlichen Personen zugeordnet sind, wobei jeder Personendatensatz ein mittels einer personifizierten Transformationsvorschrift transformiertes biometrisches Referenzmerkmal einer Person umfasst, mit: Empfangen einer Personenkennung durch den Identifikationsserver über ein Kommunikationsnetzwerk, wobei die Personenkennung der zu identifizierenden Person zugeordnet ist; Auswählen eines Hinweises auf eine personifizierte Transformationsvorschrift zur Transformation eines biometrischen Merkmals der zu identifizierenden Person anhand der empfangenen Personenkennung durch den Identifikationsserver, wobei die personifizierte Transformationsvorschrift der zu identifizierenden Person zugeordnet ist; Aussenden einer Aufforderung zur Übermittlung eines mittels der personifizierten Transformationsvorschrift transformierten biometrischen Merkmals der zu identifizierenden Person durch den Identifikationsserver an eine Identifikationsvorrichtung, welche der zu identifizierenden Person zugeordnet ist, wobei die Aufforderung den Hinweis auf die personifizierte Transformationsvorschrift umfasst; Empfangen des transformierten biometrischen Merkmals der zu identifizierenden Person von der Identifikationsvorrichtung durch den Identifikationsserver; und Vergleichen des empfangenen transformierten biometrischen Merkmals mit dem transformierten biometrischen Referenzmerkmal, welches der zu identifizierenden Person zugeordnet ist, durch den Identifikationsserver, um die zu identifizierende Person zu identifizieren. Dadurch wird der Vorteil erreicht, dass ein Datenschutz bei der Identifikation der zu identifizierenden Person erhöht werden kann, da eine Identifikation der zu identifizierenden Person nur bei Kenntnis der personifizierten Transformationsvorschrift durchgeführt werden kann.

Das Verfahren kann mittels des erfindungsgemäßen Identifikationsservers und der erfindungsgemäßen Identifikationsvorrichtung durchgeführt werden. Weitere Merkmale des Verfahrens ergeben sich unmittelbar aus der Funktionalität des erfindungsgemäßen Identifikationsservers und aus der Funktionalität der erfindungsgemäßen Identifikationsvorrichtung.

Gemäß einer Ausführungsform ist der Hinweis auf die personifizierte Transformationsvorschrift die personifizierte Transformationsvorschrift oder ausschließlich eine Bezeichnung der Transformationsvorschrift. Dadurch wird der Vorteil erreicht, dass ein eindeutiger Hinweis auf die personifizierte Transformationsvorschrift übermittelt werden kann.

Gemäß einer weiteren Ausführungsform ist die personifizierte Transformationsvorschrift, welche der zu identifizierenden Person zugeordnet ist, eine der folgenden Transformationsvorschriften: asymmetrische Verschlüsselung unter Verwendung eines kryptografischen Schlüssels, welcher der zu identifizierenden Person zugeordnet ist, digitale Signierung unter Verwendung eines kryptographischen Signaturschlüssels, welcher der zu identifizierenden Person zugeordnet ist, eine digitale Codierungsvorschrift, insbesondere ein digitaler Code, wie ein RS-Code oder ein Huffmann-Code, welcher der zu identifizierenden Person zugeordnet ist, eine Scrambling-Vorschrift, eine digitale Modulationsvorschrift, welche der zu identifizierenden Person zugeordnet ist, oder eine Template Protection Transformationsvorschrift. Dadurch wird der Vorteil erreicht, dass eine Rückgewinnung des biometrischen Merkmals aus dem transformierten biometrischen Merkmals verhindert werden kann, um den Datenschutz weiter zu erhöhen.

Erfindungsgemäß ist jedes transformierte biometrische Referenzmerkmal der jeweiligen Person und zumindest einem Dienstanbieter zugeordnet oder umfasst jeder Personendatensatz eine Anzahl von transformierten biometrischen Referenzmerkmalen, welche derselben Person und unterschiedlichen Dienstanbietern zugeordnet sind, wobei jedes transformierte biometrische Referenzmerkmal der Anzahl der transformierten biometrischen Referenzmerkmale einem Dienstanbieter zugeordnet ist, oder geht jedes transformierte biometrische Referenzmerkmal der Anzahl der transformierten biometrischen Referenzmerkmale aus einer Transformation eines biometrischen Referenzmerkmals der Person mittels einer Transformationsvorschrift hervor, wobei jede Transformationsvorschrift der Person und einem Dienstanbieter, insbesondere genau einem Dienstanbieter, zugeordnet ist, und umfasst das Verfahren die Verfahrensschritte: Empfangen der Personenkennung zusammen mit einer Dienstanbieterkennung durch den Identifikationsserver; und Auswählen des Hinweises auf die personifizierte Transformationsvorschrift anhand der Personenkennung und der Dienstanbieterkennung durch den Identifikationsserver, wobei die personifizierte Transformationsvorschrift der zu identifizierenden Person und dem mittels der Dienstanbieterkennung identifizierten Dienstanbieter zugeordnet ist. Dadurch wir der Vorteil erreicht, dass die zu identifizierende Person dienstbezogen identifiziert werden kann.

Erfindungsgemäß umfasst das Verfahren die Verfahrensschritte: Aussenden der Aufforderung zur Übermittlung des mittels der personifizierten und dem Dienstanbieter zugeordneten Transformationsvorschrift transformierten biometrischen Merkmals der zu identifizierenden Person über das Kommunikationsnetzwerk, wobei die Aufforderung den Hinweis auf die personifizierte Transformationsvorschrift und einen Hinweis auf den Dienstanbieter umfasst; und Vergleichen des empfangenen transformierten biometrischen Merkmals mit dem transformierten biometrischen Referenzmerkmal, welches der zu identifizierenden Person zugeordnet und dem Dienstanbieter zugeordnet ist, durch den Identifikationsserver. Dadurch wir der Vorteil erreicht, dass die zu identifizierende Person effizienter dienstbezogen identifiziert werden kann.

Gemäß einer weiteren Ausführungsform umfasst das Verfahren den Verfahrensschritt: bei einer Übereinstimmung des empfangenen transformierten biometrischen Merkmals mit dem transformierten biometrischen Referenzmerkmal, Aussenden eines Identifikationssignals über das Kommunikationsnetzwerk, insbesondere an einen Dienstserver eines Dienstanbieters, um eine Identifikation der zu identifizierenden Person anzuzeigen, oder Ausführen eines elektronischen Dienstes. Dadurch wird der Vorteil erreicht, dass die Identität der zu identifizierenden Person bestätigt werden kann.

Gemäß einer weiteren Ausführungsform ist der Identifikationsserver ein eID-Server oder ein Dienstserver eines Dienstanbieters, welcher einen elektronischen Dienst ausführt, und ist die Identifikationsvorrichtung ein Kommunikationsgerät der zu identifizierenden Person oder ein Personalausweis der zu identifizierenden Person mit einem elektronischen Chip, in welchem die personifizierte Transformationsvorschrift gespeichert ist.

Gemäß einem vierten Aspekt betrifft die Erfindung ein Verfahren zur Identifizierung einer zu identifizierenden Person gegenüber einem Dienstanbieter unter Verwendung eines biometrischen Merkmals der zu identifizierenden Person mittels einer Identifikationsvorrichtung, mit: Empfangen einer Dienstanbieterkennung des Dienstanbieters; Auswählen einer Transformationsvorschrift, welche dem Dienstanbieter zugeordnet ist, aus einer Mehrzahl von Transformationsvorschriften, welche unterschiedlichen Dienstanbietern zugeordnet sind, wobei jede Transformationsvorschrift eine Dienstanbieter spezifische Transformation des biometrischen Merkmals der zu identifizierenden Person bewirkt; Transformieren des biometrischen Merkmals der zu identifizierenden Person mittels der ausgewählten Transformationsvorschrift in ein transformiertes biometrisches Merkmal der zu identifizierenden Person; und Ausgeben des transformierten biometrischen Merkmals. Dadurch wird der Vorteil erreicht, dass die zu identifizierenden Person mittels des erfindungsgemäßen Identifikationsservers effizient identifiziert werden kann.

Das Verfahren kann mittels der erfindungsgemäßen Identifikationsvorrichtung durchgeführt werden. Weitere Merkmale des Verfahrens ergeben sich unmittelbar aus der Funktionalität der erfindungsgemäßen Identifikationsvorrichtung.

Gemäß einer Ausführungsform umfasst das Verfahren den Verfahrensschritt: Empfangen des biometrischen Merkmals über eine Kommunikationsschnittstelle der Identifikationsvorrichtung; oder Erfassen des biometrischen Merkmals mittels der Identifikationsvorrichtung. Dadurch wird der Vorteil erreicht, dass das biometrische Merkmal effizient bereitgestellt werden kann.

Erfindungsgemäß umfasst das Verfahren den Verfahrensschritt: Aussenden des transformierten biometrischen Merkmals an einen Identifikationsserver. Dadurch wird der Vorteil erreicht, dass das transformierte biometrische Merkmal effizient an den erfindungsgemäßen Identifikationsserver übermittelt werden kann.

Gemäß einer weiteren Ausführungsform ist die Identifikationsvorrichtung ein Smartphone oder ist die Identifikationsvorrichtung ein Identifikationsdokument mit einem elektronischen Chip.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: eine schematische Darstellung eines Identifikationsservers;
- Fig. 2: eine schematische Darstellung einer Identifikationsvorrichtung;
- Fig. 3: eine schematische Darstellung eines Verfahrens zur Identifikation einer zu identifizierenden Person mittels des Identifikationsservers; und
- Fig. 4: eine schematische Darstellung eines Verfahrens zur Identifikation einer zu identifizierenden Person mittels der Identifikationsvorrichtung.

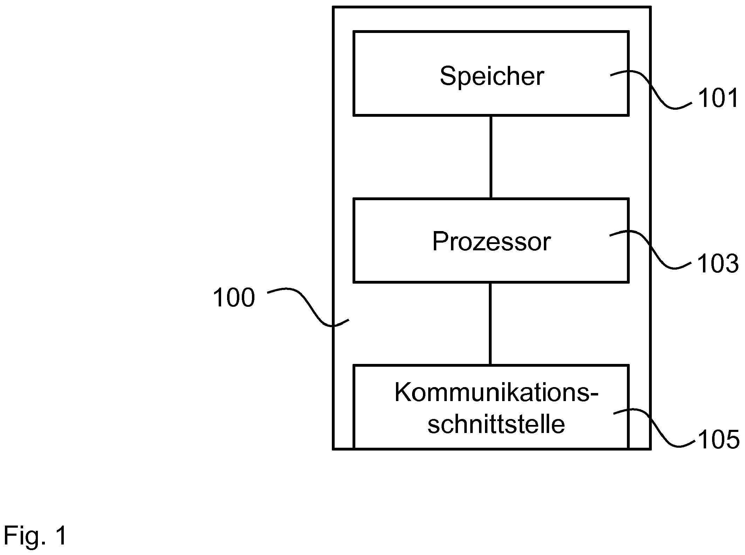

Fig. 1 zeigt eine schematische Darstellung eines Identifikationsservers 100. Der Identifikationsserver 100 umfasst einen Speicher 101, einen Prozessor 103 und eine Kommunikationsschnittstelle 105, wobei der Prozessor 103 mit dem Speicher 101 und mit der Kommunikationsschnittstelle 105 verbunden ist.

Der Identifikationsserver 100 zur Identifikation einer zu identifizierenden Person ist ausgebildet mit: dem Speicher 101 zum Bereitstellen einer Mehrzahl von Personendatensätzen, welche unterschiedlichen Personen zugeordnet sind, wobei jeder Personendatensatz ein mittels einer personifizierten Transformationsvorschrift transformiertes biometrisches Referenzmerkmal einer Person umfasst; der Kommunikationsschnittstelle 105 zum Empfangen einer Personenkennung über ein Kommunikationsnetzwerk, wobei die Personenkennung der zu identifizierenden Person zugeordnet ist; und dem Prozessor 103, welcher ausgebildet ist, anhand der empfangenen Personenkennung einen Hinweis auf die personifizierte Transformationsvorschrift, welche der zu identifizierenden Person zugeordnet ist, aus dem Speicher 101 auszulesen; wobei die Kommunikationsschnittstelle 105 ausgebildet ist, eine Aufforderung zur Übermittlung eines mittels der personifizierten Transformationsvorschrift transformierten biometrischen Merkmals der zu identifizierenden Person über das Kommunikationsnetzwerk auszusenden, wobei die Aufforderung den Hinweis auf die personifizierte Transformationsvorschrift umfasst, wobei die Kommunikationsschnittstelle 105 ferner ausgebildet ist, das transformierte biometrische Merkmal der zu identifizierenden Person über das Kommunikationsnetzwerk zu empfangen; und wobei der Prozessor 103 ausgebildet ist, das empfangene transformierte biometrische Merkmal mit dem transformierten biometrischen Referenzmerkmal zu vergleichen, um die zu identifizierende Person zu identifizieren. Hierbei kann ein Datenschutz bei der Identifikation der zu identifizierenden Person erhöht werden, da eine Identifikation der zu identifizierenden Person nur bei Kenntnis der personifizierten Transformationsvorschrift durchgeführt werden kann.

Der Identifikationsserver 100 kann ein Computer sein, auf welchem ein elektronischer Identifikationsdienst ausgeführt wird.

Die Mehrzahl der Personendatensätze kann beispielsweise 2, 3, 4, 5, 10, 20, 230, 40, 50, 100, 250, 500, 750, 1000, 5000, 10000, 50000, 100000, 500000, 1000000, 5000000 oder 10000000 betragen. Ferner kann die Mehrzahl der Personendatensätze in Form einer Datenbank in dem Speicher 101 gespeichert sein.

Die personifizierte Transformationsvorschrift kann eine asymmetrische Verschlüsselung, eine digitale Signierung, eine digitale Codierungsvorschrift, eine Scrambling-Vorschrift, eine digitale Modulationsvorschrift oder eine Template Protection Transformationsvorschrift sein.

Das biometrische Referenzmerkmal kann ein Fingerabdruck, ein Handvenenmuster, ein Stimmmuster, ein Gesichtsbild oder ein Irisabbild eines Auges der zu identifizierenden Person sein. Beispielsweise wird das biometrische Referenzmerkmal der zu identifizierbaren Person in einer betraubaren Umgebung, wie in einer Geschäftsstelle eines Betreibers des Identifikationsservers 100 oder in einem Passamt in einem Bürgerbüro, erfasst. Im Anschluss an das Erfassen wird das erfasste biometrische Referenzmerkmal mittels der personifizierten Transformationsvorschrift transformiert und wird das transformierte biometrische Referenzmerkmal an den Identifikationsserver 100 übermittelt. Ferner kann das erfasste biometrische Referenzmerkmal im Anschluss an das Erfassen mittels der personifizierten Transformationsvorschrift transformiert, das transformierte biometrische Referenzmerkmal in einem der zu identifizierenden Person zugeordneten Speicherelement, wie einer Smartcard, gespeichert und das gespeicherte transformierte biometrische Referenzmerkmal zu einem späteren Zeitpunkt an den Identifikationsserver 100 übermittelt werden.

Das transformierte biometrische Merkmal kann ein mittels einer Identifikationsvorrichtung erfasstes biometrisches Merkmal, wie ein Fingerabdruck, ein Handvenenmuster, ein Stimmmuster, ein Gesichtsbild oder ein Irisabbild eines Auges der zu identifizierenden Person sein, welches anhand der personifizierten Transformationsvorschrift transformiert wurde.

Die Kommunikationsschnittstelle 105 kann eine Local Area Network (LAN) Kommunikationsschnittstelle oder eine Wireless Local Area Network (W-LAN) Kommunikationsschnittstelle umfassen. Ferner kann die Kommunikationsschnittstelle 105 zur verschlüsselten Kommunikation gemäß dem Standard Secure Sockets Layer / Transport Layer Security (SSL/TLS) ausgebildet sein. Die Kommunikationsschnittstelle 105 kann ferner zur digitalen Signierung von zu übermittelnden Daten ausgebildet sein. Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Die Personenkennung kann ein Personendatum, wie ein Name oder ein Vorname, oder ein Benutzername der zu identifizierenden Person sein. Ferner kann der Hinweis auf die personifizierte Transformationsvorschrift eine Bezeichnung der Transformationsvorschrift umfassen.

Der Prozessor 103 kann ausgebildet sein, basierend auf dem Vergleich des empfangenen transformierten biometrischen Merkmals mit dem transformierten biometrischen Referenzmerkmals ein Vergleichsmaß zu bestimmen. Erreicht oder überschreitet das Vergleichsmaß einen vorbestimmten Schwellwert, so kann die zu identifizierende Person als die Person identifiziert werden, der das transformierte biometrische Referenzmerkmal zugeordnet ist.

Die zu identifizierende Person kann ein Benutzerkonto bei einem Dienstanbieter, wie einem Internetshop-Dienstanbieter oder einem Onlinebanking-Dienstanbieter, besitzen. Um ihre Identität gegenüber dem Dienstanbieter nachweisen zu können, kann die zu identifizierende Person in dem Benutzerkonto Zugangsdaten oder Credentials für die Identifikation mittels des Identifikationsservers 100 hinterlegen. Um die zu identifizierende Person zu identifizieren kann ein Dienstserver des Dienstanbieters gegenüber dem Identifikationsserver 100 eine Identifikation oder eine Identitätsprüfung der zu identifizierenden Person begehren. Hierzu kann der Dienstserver dem Identifikationsserver 100 die Personenkennung übermitteln. Ferner kann der Dienstserver seinen Anspruch auf die Identifikation der zu identifizierenden Person gegenüber dem Identifikationsserver 100 mittels der Credentials nachweisen. Daraufhin kann der Prozessor 103 des Identifikationsservers 100 den Hinweis auf die personifizierte Transformationsvorschrift aus dem Speicher 101 des Identifikationsservers 100 auslesen und kann die Kommunikationsschnittstelle 105 die Aufforderung zur Übermittlung des mittels der personifizierten Transformationsvorschrift transformierten biometrischen Merkmals der zu identifizierenden Person über das Kommunikationsnetzwerk an die zu identifizierende Person oder an eine der zu identifizierenden Person zugeordneten Identifikationsvorrichtung aussenden. Die zu identifizierende Person kann daraufhin, beispielsweise mittels der der zu identifizierenden Person zugeordneten Identifikationsvorrichtung, das transformierte biometrische Merkmal erzeugen und an die Kommunikationsschnittstelle 105 des Identifikationsservers 100 über das Kommunikationsnetzwerk übermitteln. Der Prozessor 103 kann anschließend das empfangene transformierte biometrische Merkmal mit dem transformierten biometrischen Referenzmerkmal vergleichen, um die zu identifizierende Person zu identifizieren. Ferner kann der Identifikationsserver 100 ausgebildet sein, ein Ergebnis des Vergleichs an den Dienstserver, beispielsweise mittels der Kommunikationsschnittstelle 105 über das Kommunikationsnetzwerk, zu übermitteln. Beispielsweise bestätigt der Identifikationsserver 100 dem Dienstserver die Identität der zu identifizierenden Person. Um eine zukünftige Identifikation der zu identifizierenden Person zu verhindern, kann die zu identifizierende Person die personifizierte Transformationsvorschrift, beispielsweise aus einem Speicher der der zu identifizierenden Person zugeordneten Identifikationsvorrichtung, löschen. Hierdurch kann eine Revozierung des in dem Speicher 101 des Identifikationsservers 100 gespeicherten transformierten biometrischen Referenzmerkmals erreicht werden. Gemäß einer Ausführungsform können der Identifikationsserver 100 und der Dienstserver durch einen einzigen Server gebildet sein.

Gemäß einer Ausführungsform ist die Kommunikationsschnittstelle 105 ferner ausgebildet, ansprechend auf das Aussenden der Aufforderung das transformierte biometrische Merkmal der zu identifizierenden Person über das Kommunikationsnetzwerk zu empfangen.

Gemäß einer weiteren Ausführungsform sind das transformierte biometrische Referenzmerkmal und das transformierte biometrische Merkmal der zu identifizierenden Person unterschiedlich.

Gemäß einer weiteren Ausführungsform sind das transformierte biometrische Merkmal und das nichttransformierte biometrische Merkmal der zu identifizierenden Person unterschiedlich.

Gemäß einer weiteren Ausführungsform sind das transformierte biometrische Referenzmerkmal und das nichttransformierte biometrische Referenzmerkmal der zu identifizierenden Person unterschiedlich.

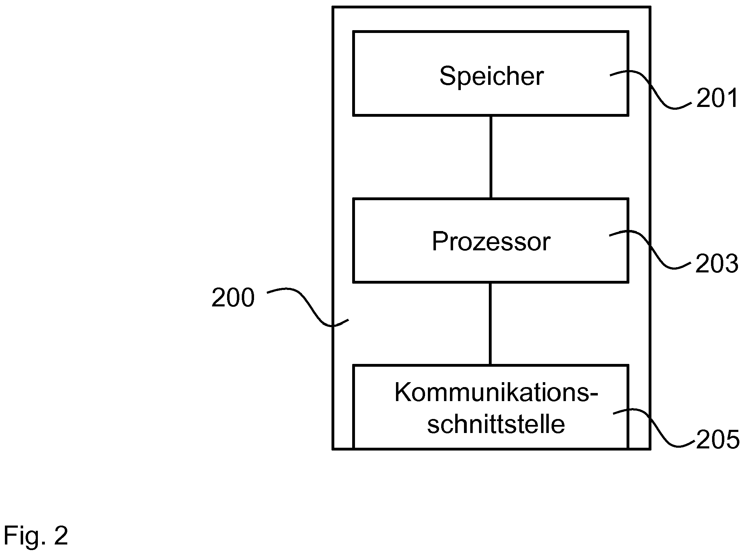

Fig. 2 zeigt eine schematische Darstellung einer Identifikationsvorrichtung 200. Die Identifikationsvorrichtung 200 umfasst einen Speicher 201, einen Prozessor 203 und eine Kommunikationsschnittstelle 205, wobei der Prozessor 203 mit dem Speicher 201 und mit der Kommunikationsschnittstelle 205 verbunden ist.

Die Identifikationsvorrichtung 200 zur Identifizierung einer zu identifizierenden Person gegenüber einem Dienstanbieter unter Verwendung eines biometrischen Merkmals der zu identifizierenden Person ist ausgebildet mit: der Kommunikationsschnittstelle 205, welche ausgebildet ist, eine Dienstanbieterkennung des Dienstanbieters zu empfangen; dem Speicher 201, welcher ausgebildet ist, eine Mehrzahl von personifizierten Transformationsvorschriften bereitzustellen, welche der zu identifizierenden Person und unterschiedlichen Dienstanbietern zugeordnet sind, wobei jede personifizierte Transformationsvorschrift eine Dienstanbieter spezifische Transformation des biometrischen Merkmals bewirkt; und dem Prozessor 203, welcher ausgebildet ist, eine dem Dienstanbieter zugeordnete und personifizierte Transformationsvorschrift aus dem Speicher auszulesen und das biometrische Merkmal der zu identifizierenden Person mittels der ausgelesenen Transformationsvorschrift in ein transformiertes biometrisches Merkmal der Person zu transformieren; wobei die Kommunikationsschnittstelle 205 ausgebildet ist, das transformierte biometrische Merkmal auszugeben. Hierbei kann die zu identifizierenden Person mittels des Identifikationsservers 100 identifiziert werden.

Das biometrische Merkmal kann ein Fingerabdruck, ein Handvenenmuster, ein Stimmmuster, ein Gesichtsbild oder ein Irisabbild eines Auges der zu identifizierenden Person sein. Die Mehrzahl der personifizierten Transformationsvorschriften kann 2, 3, 4, 5, 10, 20, 50 oder 100 betragen. Ferner können die personifizierten Transformationsvorschriften der Mehrzahl der personifizierten Transformationsvorschriften Vorschriften zur asymmetrischen Verschlüsselung, Vorschriften zur digitalen Signierung, digitale Codierungsvorschriften, Scrambling-Vorschriften, digitale Modulationsvorschriften oder Template Protection Transformationsvorschriften sein.

Die Identifikationsvorrichtung 200 kann ein Computer, ein Terminal, ein Kommunikationsgerät, ein Telefon, insbesondere ein Mobiltelefon oder ein Smartphone, oder ein Identifikationsdokument mit einem elektronischen Chip sein, wobei der elektronische Chip die Kommunikationsschnittstelle, den Speicher und den Prozessor implementiert.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die Kommunikationsschnittstelle 205 kann eine Local Area Network (LAN) Kommunikationsschnittstelle, eine Wireless Local Area Network (W-LAN) Kommunikationsschnittstelle, eine Nahfeldkommunikationsschnittstelle, eine Radiofrequenzidentifikations-Kommunikationsschnittstelle und/oder eine Mobilfunkschnittstelle umfassen.

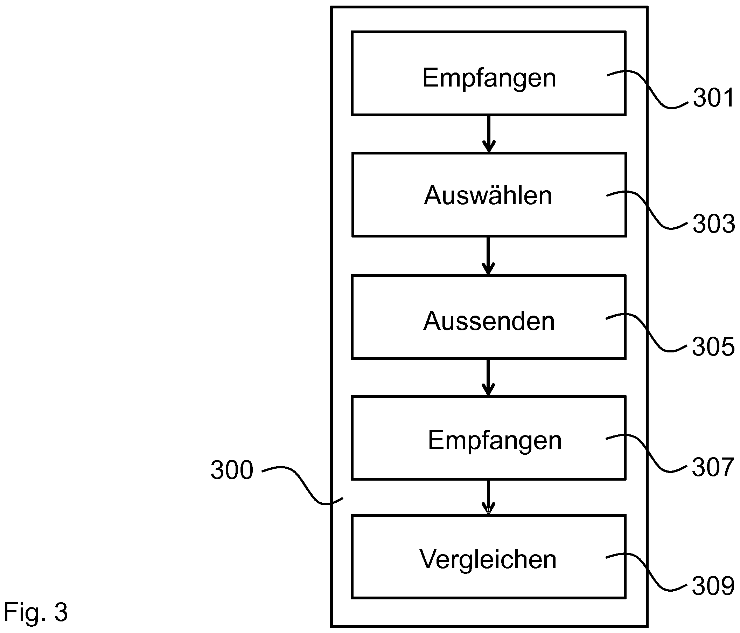

Fig. 3 zeigt eine schematische Darstellung eines Verfahrens 300 zur Identifikation einer zu identifizierenden Person mittels des Identifikationsservers 100. Das Verfahren 300 umfasst die Verfahrensschritte 301 bis 309.

Das Verfahren 300 zur Identifikation einer zu identifizierenden Person mittels des Identifikationsservers 100, wobei der Identifikationsserver 100 eine Mehrzahl von Personendatensätzen bereitstellt, welche unterschiedlichen Personen zugeordnet sind, wobei jeder Personendatensatz ein mittels einer personifizierten Transformationsvorschrift transformiertes biometrisches Referenzmerkmal einer Person umfasst, umfasst die Verfahrensschritte: Empfangen 301 einer Personenkennung durch den Identifikationsserver 100 über ein Kommunikationsnetzwerk, wobei die Personenkennung der zu identifizierenden Person zugeordnet ist; Auswählen 303 eines Hinweises auf eine personifizierte Transformationsvorschrift zur Transformation eines biometrischen Merkmals der zu identifizierenden Person anhand der empfangenen Personenkennung durch den Identifikationsserver 100, wobei die personifizierte Transformationsvorschrift der zu identifizierenden Person zugeordnet ist; Aussenden 305 einer Aufforderung zur Übermittlung eines mittels der personifizierten Transformationsvorschrift transformierten biometrischen Merkmals der zu identifizierenden Person durch den Identifikationsserver 100 an die Identifikationsvorrichtung 200, welche der zu identifizierenden Person zugeordnet ist, wobei die Aufforderung den Hinweis auf die personifizierte Transformationsvorschrift umfasst; Empfangen 307 des transformierten biometrischen Merkmals der zu identifizierenden Person von der Identifikationsvorrichtung 200 durch den Identifikationsserver 100; und Vergleichen 309 des empfangenen transformierten biometrischen Merkmals mit dem transformierten biometrischen Referenzmerkmal, welches der zu identifizierenden Person zugeordnet ist, durch den Identifikationsserver 100, um die zu identifizierende Person zu identifizieren.

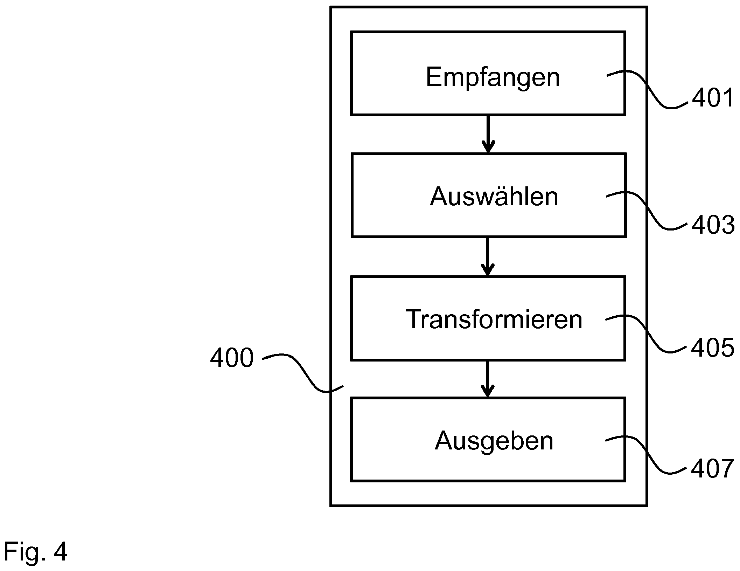

Fig. 4 zeigt eine schematische Darstellung eines Verfahrens 400 zur Identifikation einer zu identifizierenden Person mittels der Identifikationsvorrichtung 200. Das Verfahren 400 umfasst die Verfahrensschritte 401 bis 407.

Das Verfahren 400 zur Identifizierung einer zu identifizierenden Person gegenüber einem Dienstanbieter unter Verwendung eines biometrischen Merkmals der zu identifizierenden Person mittels der Identifikationsvorrichtung 200 umfasst die Verfahrensschritte: Empfangen 401 einer Dienstanbieterkennung des Dienstanbieters; Auswählen 403 einer Transformationsvorschrift, welche dem Dienstanbieter zugeordnet ist, aus einer Mehrzahl von Transformationsvorschriften, welche unterschiedlichen Dienstanbietern zugeordnet sind, wobei jede Transformationsvorschrift eine Dienstanbieter spezifische Transformation des biometrischen Merkmals der zu identifizierenden Person bewirkt; Transformieren 405 des biometrischen Merkmals der zu identifizierenden Person mittels der ausgewählten Transformationsvorschrift in ein transformiertes biometrisches Merkmal der zu identifizierenden Person; und Ausgeben 407 des transformierten biometrischen Merkmals.

Gemäß einer Ausführungsform kann zum Zeitpunkt der Beantragung eines Passes oder Personalausweises die zu identifizierende Person, wie ein Bürger, in einer vertrauenswürdigen Umgebung präsent sein, ihre Identität geprüft und von ihr biometrische Daten oder Merkmale, wie ein Fingerabdruck oder ein biometrisches Gesichtsbild, erhoben werden. Diese biometrischen Daten oder Merkmale können zum Generieren des transformierten biometrischen Referenzmerkmals verwendet werden. Ferner können diese Identitätsprüfungen mit verschieden funktionsstarken Verfahren in verschieden betraubaren Umgebungen durchgeführt werden. Hierbei kann ein Fingerabdruck an einem nicht als fälschungssicher bekannten Sensor zu einer anderen Zuverlässigkeit der Identitätsvermutung führen als eine Iriserkennung in einer zertifizierten Umgebung. Daher können verschiedene Vertrauensstufen verwendet werden, anhand derer eine Anwendung auswählen kann, ob die erreichte Sicherheit für ihre Zwecke ausreichend ist. Der Kauf einer S-Bahn-Fahrkarte wird hierbei nicht denselben Anforderungen unterliegen wie eine Banküberweisung über tausende Euro.

Gemäß einer weiteren Ausführungsform führt der Identifikationsserver 100 Authentifizierungen oder Identifikationen durch, jedoch führt der Identifikationsserver 100 keine Autorisierungen durch. Hierbei obliegt dies der fachlichen Anwendung, wie dem Dienstserver des Dienstanbieters, die diese Authentifizierung anfordert. Eine Anwendung fordert nur dann eine Authentifizierung oder Identifikation der zu identifizierenden Person an, wenn diese Person die erforderlichen biometrischen Daten oder Merkmale für genau diese Anwendung freigegeben hat. Hierbei kann bei Nichtvorliegen dieser Freigabe eine unautorisierte Prüfung verhindert werden. Auf diese Weise kann die zu identifizierende Person festlegen, für welche Anwendungen oder Gruppen von Anwendungen welche biometrischen Authentifikationen durchgeführt werden und welche Transaktionen, beispielsweise Volumen oder Art, basierend auf der erfolgten Authentifizierung oder Identifikation durchgeführt werden. Ferner kann ein entsprechend konditioniertes transformiertes biometrisches Referenzmerkmal revoziert werden.

Gemäß einer weiteren Ausführungsform kann bei Verwendung eines Template Protection Verfahrens als personifizierte Transformationsvorschrift erreicht werden, dass biometrische Referenzmerkmale so geschützt werden, dass ohne Zugabe eines weiteren Datums kein erfolgreicher Vergleich mit erfassten biometrischen Merkmalen, wie Livedaten, möglich ist. Dieses weitere Datum wird erfindungsgemäß von der zu identifizierenden Person, wie einem Merkmalsträger, so gewählt, dass für einen anderen Verwendungszweck, beispielsweise einen anderen Shop oder eine andere Bank, jeweils ein anders Datum verwendet wird. Dieses Datum ist nicht auf dem Identifikationsserver 100 hinterlegt. Ein systematisches Profiling und eine Verknüpfung von Identitäten durch Auftraggeber der Authentifizierung, wie Shops oder Banken, mit anderen Auftraggebern kann demzufolge mit den auf dem Identifikationsserver 100 hinterlegten transformierten biometrischem Referenzmerkmalen, wie Referenzdaten, nicht oder nur eingeschränkt durchgeführt werden. Hierbei kann die zu identifizierende Person ferner die verschiedenen Daten anwendungsspezifisch wählen. Das könnten etwa Kontonummern oder Kundennummern sein, aber auch spezifisch ausgewählte Zertifikate. Möglich ist auch das Vorhalten dieser Daten ebenfalls auf dem Identifikationsserver 100, wobei die Daten verschlüsselt abgelegt sind und der Zugriffsschlüssel sich im Besitz der zu identifizierenden Person befindet und nicht auf dem Identifikationsserver 100 vorliegt. Beispielsweise könnte sich dieser Schlüssel auf einer Smartcard oder einem Personalausweis befinden. Für verschiedene Auftraggeber kann die zu identifizierende Person verschiedene Daten wählen. Sie kann aber bei Bedarf auch Gruppen von Auftraggebern das gleiche Datum zuordnen. Möchte die zu identifizierende Person für einen neuen Anwendungsfall oder einen neuen Auftraggeber neue transformierte biometrische Referenzmerkmale erzeugen, können diese aus nichttransformierten biometrischen Referenzmerkmalen erzeugt werden. Hierbei liegen diese für den Identifikationsserver 100 nicht zugreifbar vor. Erst bei Bedarf werden unter Benutzung eines im Zugriff der zu identifizierenden Person befindlichen Schlüssels die auf dem Identifikationsserver oder einer Smartcard befindlichen verschlüsselten biometrischen Referenzmerkmale entschlüsselt und in ein neues geschütztes Template überführt.

Gemäß einer weiteren Ausführungsform können die nichttransformierten biometrischen Referenzmerkmale der zu identifizierbaren Person in einer betraubaren Umgebung erfasst werden. Das kann etwa das Passamt in einem Bürgerbüro sein. Die verwendeten Modalitäten können hierbei vielgestaltig sein. Für heutige Anwendungen bieten sich Finger, Sprache, Gesicht, Iris und womöglich Handvene als nichttransformierte biometrische Referenzmerkmale an. Die erfassten nichttransformierten biometrischen Referenzmerkmale können verschlüsselt abgelegt werden, der Schlüssel kann sich in der Obhut der zu identifizierenden Person befinden, beispielsweise auf einem Personalausweis. Zweckdienlich kann zu diesem Zeitpunkt auch eine gewisse Anzahl von transformierten biometrischen Referenzmerkmalen, wie geschützten Templates, erzeugt werden. Die transformierten biometrischen Referenzmerkmale, wie verschlüsselte Referenzdaten, können auf dem Identifikationsserver 100, wie einem Server eines Authentifikationsdienstleisters, oder auch auf einer Karte, wie einer Smartcard, der zu identifizierenden Person abgelegt werden.

Gemäß einer weiteren Ausführungsform kann die zu identifizierende Person zur Einbindung eines neuen Dienstanbieters, wie eines Shops, die Einbindung genehmigen und dem Dienstanbieter ein transformiertes biometrisches Referenzmerkmal, wie ein dediziertes geschütztes Template, zuweisen. Die Zuweisung kann in einem entsprechenden Eintrag in einer Datenbank bestehen oder auch in der Übergabe des diesem Dienstanbieter zugeordneten transformierten biometrischen Referenzmerkmals. Dem Dienstanbieter können ferner Credentials ausgehändigt werden, mit denen er seine Identität und sein Recht auf die vorzunehmende Identitätsprüfung der zu identifizierenden Person gegenüber dem Identifikationsserver 100 oder dem Authentifikationsdienstleister nachweisen kann.

Gemäß einer weiteren Ausführungsform kann zur Identifikation oder zur Prüfung der Identität der zu identifizierenden Person ein Dienstserver des Dienstanbieters gegenüber dem Identifikationsserver 100, wie einem Dienstleister, eine Identitätsprüfung begehren und seinen Anspruch darauf mittels der ihm überlassenen Credentials nachweisen. Der Identifikationsserver 100 benennt der zu identifizierenden Person den Dienstanbieter, wie einen Shop, und fordert von ihr die Übermittlung des passenden transformierten biometrischen Merkmals an. Das übermittelte transformierte biometrische Merkmal wird durch den Prozessor 103 des Identifikationsserver 100 mit dem transformierten biometrischen Referenzmerkmal verglichen und das Ergebnis wird dem Dienstserver oder dem Dienstanbieter mitgeteilt. Bei Verwendung von Template Protection als personifizierte Transformationsvorschrift kann hierbei der Vergleich nur durchgeführt werden, wenn zueinander passenden Templates, beispielsweise das transformierte biometrische Referenzmerkmal, wie ein spezifisches geschütztes Referenztemplate, und das mit einem spezifischen Datum erzeugte transformierte biometrische Merkmal, wie ein aktuelles geschütztes Template, verwendet werden.

Gemäß einer weiteren Ausführungsform kann bei Verwendung von Template Protection als personifizierte Transformationsvorschrift die zu identifizierende Person die Authentifizierung für einen bestimmten Dienstanbieter stoppen, indem diese das betreffende dienstanbieterspezifische Datum vernichtet oder löscht. Damit können künftige Vergleiche nicht mehr durchgeführt werden. Zusätzlich können die betreffenden transformierten biometrischen Referenzmerkmale, wie geschützte Referenztemplates, aus dem Speicher 101 des Identifikationsservers 100 gelöscht werden. Hierdurch kann eine Revozierung der transformierten biometrischen Referenzmerkmale erreicht werden.

Gemäß einer weiteren Ausführungsform kann eine Zweckbindung der Authentifizierung oder der Identifikation erreicht werden. Bei der Erzeugung eines transformierten biometrischen Referenzmerkmals, wie eines spezifischen Templates, spätestens jedoch bei der Zuweisung zu einem bestimmten Dienstanbieter, wie einem Shop, oder einer Menge von Dienstanbieters, können dem eigentlichen Authentifikationsergebnis, wie einer Betätigung der Identität der zu identifizierenden Person, Zusatzinformationen beigegeben werden, wie sie von gängigen digitalen Zertifikaten bekannt sind. Das können etwa sein: Zweckbindung für einen bestimmten Vertragspartner, zeitliche Geltungsdauer oder finanzielles Volumen.

Gemäß einer weiteren Ausführungsform kann das Verfahren 300 biometrisch sein, also mit einer Merkmalsbindung an die zu identifizierende Person arbeiten. Die erfassten transformierten biometrischen Referenzmerkmale können hierbei revoziert werden und von der zu identifizierenden Person einem dedizierten Einsatzzweck zugeordnet werden. Damit ist diese biometrische Vorgehensweise datenschutzfreundlich. Ferner kann eine Eingabe von Zugangsdaten oder Credentials durch die zu identifizierende Person in die Identifikationsvorrichtung 200 entfallen.

Gemäß einer weiteren Ausführungsform kann mittels des Verfahrens 300 eine revozierbare, von der zu identifizierenden Person kontrollierbare, Profilbildung verhindernde und mandantenfähige biometrische Authentifizierung erreicht werden.

Gemäß einer weiteren Ausführungsform können von der zu identifizierenden Person in einem Ausweisamt bei der Beantragung eines Personalausweises Fingerabdrücke und ein Gesichtsbild aufgenommen und diese verschlüsselt auf den Identifikationsserver 100, wie einen zentralen Server, abgelegt werden. Die Entschlüsselung kann anhand eines auf dem Personalausweis vorliegenden Datums durchgeführt werden und erfordert dessen Präsenz. Als Vorrat können bereits je zehn per Template Protection geschützte transformierte biometrische Referenzmerkmale angelegt werden. Ferner kann die zu identifizierende Person unter Benutzung ihres Personalausweises auf den Identifikationsserver 100 zugreifen und dort transformierte biometrische Referenzmerkmale anlegen, schützen, löschen, mit Namen versehen und zur Verwendung in konkreten Anwendungen zuordnen. Zum Anlegen ist jeweils die Präsenz des Personalausweises erforderlich. Ferner kann die zu identifizierende Person auf dem Identifikationsserver 100 festlegen, dass ein Dienstanbieter, wie eine Bank, ein transformiertes biometrisches Referenzmerkmal zur Identifikation oder zur Authentifizierung benutzen kann. Bei der Durchführung einer Transaktion, wie einer Überweisung, durch die zu identifizierende Person bei dem Dienstanbieter kann der Dienstanbieter bei dem Identifikationsserver 100 die Identifikation oder Authentifizierung der zu identifizierenden Person anfragen. Der Identifikationsserver 100 prüft die Berechtigung des Dienstanbieters dazu. Liegt diese vor fordert der Identifikationsserver 100 von der zu identifizierenden Person ein aktuelles transformiertes biometrisches Merkmal an, führt einen biometrischen Datenvergleich durch und bestätigt gegenüber dem Dienstanbieter die Identität der zu identifizierenden Person.

### BEZUGSZEICHENLISTE

- 100: Identifikationsserver
- 101: Speicher
- 103: Prozessor
- 105: Kommunikationsschnittstelle

- 200: Identifikationsvorrichtung
- 201: Speicher
- 203: Prozessor
- 205: Kommunikationsschnittstelle

- 300: Verfahren
- 301: Empfangen
- 303: Auswählen
- 305: Aussenden
- 307: Empfangen
- 309: Vergleichen

- 400: Verfahren
- 401: Empfangen
- 403: Auswählen
- 405: Transformieren
- 407: Ausgeben

## Patentansprüche

1. Identifikationsserver (100) zur Identifikation einer zu identifizierenden Person, mit:
einem Speicher (101) zum Bereitstellen einer Mehrzahl von Personendatensätzen, welche unterschiedlichen Personen zugeordnet sind, wobei jeder Personendatensatz ein mittels einer personifizierten Transformationsvorschrift transformiertes biometrisches Referenzmerkmal einer Person umfasst;
einer Kommunikationsschnittstelle (105) zum Empfangen einer Personenkennung und einer Dienstanbieterkennung über ein Kommunikationsnetzwerk, wobei die Personenkennung der zu identifizierenden Person zugeordnet ist und die Dienstanbieterkennung einem Dienstanbieter zugeordnet ist; und
einem Prozessor (103), welcher ausgebildet ist, anhand der empfangenen Personenkennung und der Dienstanbieterkennung einen Hinweis auf die personifizierte Transformationsvorschrift, welche der zu identifizierenden Person und dem Dienstanbieter zugeordnet ist, aus dem Speicher (101) auszulesen;
wobei die Kommunikationsschnittstelle (105) ausgebildet ist, eine Aufforderung zur Übermittlung eines mittels der personifizierten und dem Dienstanbieter zugeordneten Transformationsvorschrift transformierten biometrischen Merkmals der zu identifizierenden Person über das Kommunikationsnetzwerk auszusenden, wobei die Aufforderung den Hinweis auf die personifizierte Transformationsvorschrift und einen Hinweis auf den Dienstanbieter umfasst, wobei die Kommunikationsschnittstelle (105) ferner ausgebildet ist, das transformierte biometrische Merkmal der zu identifizierenden Person über das Kommunikationsnetzwerk zu empfangen; und
wobei der Prozessor (103) ausgebildet ist, das empfangene transformierte biometrische Merkmal mit dem transformierten biometrischen Referenzmerkmal zu vergleichen, das der Person und dem Dienstanbieter zugeordnet ist, um die zu identifizierende Person dienstanbieterbezogen zu identifizieren.

2. Identifikationsserver (100) nach Anspruch 1, wobei der Hinweis auf die personifizierte Transformationsvorschrift die personifizierte Transformationsvorschrift oder ausschließlich eine Bezeichnung der Transformationsvorschrift ist.

3. Identifikationsserver (100) nach Anspruch 1 oder 2, wobei die personifizierte Transformationsvorschrift, welche der zu identifizierenden Person zugeordnet ist, eine der folgenden Transformationsvorschriften ist: asymmetrische Verschlüsselung unter Verwendung eines kryptografischen Schlüssels, welcher der zu identifizierenden Person zugeordnet ist, digitale Signierung unter Verwendung eines kryptographischen Signaturschlüssels, welcher der zu identifizierenden Person zugeordnet ist, eine digitale Codierungsvorschrift, insbesondere ein digitaler Code, wie ein RS-Code oder ein Huffmann-Code, welcher der zu identifizierenden Person zugeordnet ist, eine Scrambling-Vorschrift, eine digitale Modulationsvorschrift, welche der zu identifizierenden Person zugeordnet ist, oder eine Template Protection Transformationsvorschrift.

4. Identifikationsserver (100) nach einem der vorstehenden Ansprüche, wobei jeder Personendatensatz eine Anzahl von transformierten biometrischen Referenzmerkmalen umfasst, welche derselben Person und unterschiedlichen Dienstanbietern zugeordnet sind, wobei jedes transformierte biometrische Referenzmerkmal der Anzahl der transformierten biometrischen Referenzmerkmale einem Dienstanbieter einer Anzahl von Dienstanbietern zugeordnet ist.

5. Identifikationsserver (100) nach Anspruch 4, wobei jedes transformierte biometrische Referenzmerkmal der Anzahl der transformierten biometrischen Referenzmerkmale aus einer Transformation eines biometrischen Referenzmerkmals der Person mittels einer Transformationsvorschrift hervorgeht, welche der Person und einem Dienstanbieter, insbesondere genau einem Dienstanbieter, zugeordnet ist.

6. Identifikationsserver (100) nach einem der vorstehenden Ansprüche, wobei der Prozessor (103) ausgebildet ist, bei einer Übereinstimmung des empfangenen transformierten biometrischen Merkmals mit dem transformierten biometrischen Referenzmerkmal die Kommunikationsschnittstelle (105) zum Aussenden eines Identifikationssignals, das eine Identifikation der zu identifizierenden Person anzeigt, über das Kommunikationsnetzwerk, insbesondere an einen Dienstserver eines Dienstanbieters, anzuweisen, oder wobei der Prozessor (103) ausgebildet ist, bei einer Übereinstimmung des empfangenen transformierten biometrischen Merkmals mit dem transformierten biometrischen Referenzmerkmal einen elektronischen Dienst auszuführen.

7. Identifikationsserver (100) nach einem der vorstehenden Ansprüche, welcher ein elD-Server oder ein Dienstserver eines Dienstanbieters ist.

8. Identifikationsvorrichtung (200) zur Identifizierung einer zu identifizierenden Person gegenüber einem Dienstanbieter unter Verwendung eines biometrischen Merkmals der zu identifizierenden Person, mit:
einer Kommunikationsschnittstelle (205), welche ausgebildet ist, eine Dienstanbieterkennung des Dienstanbieters zu empfangen;
einem Speicher (201), welcher ausgebildet ist, eine Mehrzahl von personifizierten Transformationsvorschriften bereitzustellen, welche der zu identifizierenden Person und unterschiedlichen Dienstanbietern zugeordnet sind, wobei jede personifizierte Transformationsvorschrift eine Dienstanbieter spezifische Transformation des biometrischen Merkmals bewirkt; und
einem Prozessor (203), welcher ausgebildet ist, eine dem Dienstanbieter zugeordnete und personifizierte Transformationsvorschrift aus dem Speicher (201) auszulesen und das biometrische Merkmal der zu identifizierenden Person mittels der ausgelesenen Transformationsvorschrift in ein transformiertes biometrisches Merkmal der Person zu transformieren;
wobei die Kommunikationsschnittstelle (205) ausgebildet ist, das transformierte biometrische Merkmal auszugeben,
wobei die Kommunikationsschnittstelle (205) ausgebildet ist, das transformierte biometrische Merkmal über ein Kommunikationsnetzwerk an einen Identifikationsserver (100) auszusenden.

9. Identifikationsvorrichtung (200) nach Anspruch 8, wobei die Kommunikationsschnittstelle (205) ausgebildet ist, das biometrische Merkmal zu empfangen, oder wobei die Identifikationsvorrichtung (200) eine weitere Kommunikationsschnittstelle zum Empfangen des biometrischen Merkmals aufweist oder wobei die Identifikationsvorrichtung (200) eine biometrische Erfassungseinrichtung zum Erfassen des biometrischen Merkmals umfasst.

10. Identifikationsvorrichtung (200) nach Anspruch 8 oder 9, wobei die Identifikationsvorrichtung (200) ein Smartphone ist oder wobei die Identifikationsvorrichtung (200) ein Identifikationsdokument mit einem elektronischen Chip ist, wobei der elektronische Chip die Kommunikationsschnittstelle (205), den Speicher (201) und den Prozessor (203) implementiert.

11. Verfahren (300) zur Identifikation einer zu identifizierenden Person mittels eines Identifikationsservers (100), wobei der Identifikationsserver (100) eine Mehrzahl von Personendatensätzen bereitstellt, welche unterschiedlichen Personen zugeordnet sind, wobei jeder Personendatensatz ein mittels einer personifizierten Transformationsvorschrift transformiertes biometrisches Referenzmerkmal einer Person umfasst, wobei jedes transformierte biometrische Referenzmerkmal der jeweiligen Person und zumindest einem Dienstanbieter zugeordnet ist oder wobei jeder Personendatensatz eine Anzahl von transformierten biometrischen Referenzmerkmalen umfasst, welche derselben Person und unterschiedlichen Dienstanbietern zugeordnet sind, wobei jedes transformierte biometrische Referenzmerkmal der Anzahl der transformierten biometrischen Referenzmerkmale einem Dienstanbieter zugeordnet ist, oder wobei jedes transformierte biometrische Referenzmerkmal der Anzahl der transformierten biometrischen Referenzmerkmale aus einer Transformation eines biometrischen Referenzmerkmals der Person mittels einer Transformationsvorschrift hervorgeht, wobei jede Transformationsvorschrift der Person und einem Dienstanbieter, insbesondere genau einem Dienstanbieter, zugeordnet ist, mit:
Empfangen (301) einer Personenkennung zusammen mit einer Dienstanbieterkennung durch den Identifikationsserver (100) über ein Kommunikationsnetzwerk, wobei die Personenkennung der zu identifizierenden Person zugeordnet ist;
Auswählen (303) eines Hinweises auf eine personifizierte Transformationsvorschrift zur Transformation eines biometrischen Merkmals der zu identifizierenden Person anhand der empfangenen Personenkennung und der Dienstanbieterkennung durch den Identifikationsserver (100), wobei die personifizierte Transformationsvorschrift der zu identifizierenden Person und dem mittels der Dienstanbieterkennung identifizierten Dienstanbieter zugeordnet ist;
Aussenden (305) einer Aufforderung zur Übermittlung eines mittels der personifizierten und dem Dienstanbieter zugeordneten Transformationsvorschrift transformierten biometrischen Merkmals der zu identifizierenden Person durch den Identifikationsserver (100) an eine Identifikationsvorrichtung (200), welche der zu identifizierenden Person zugeordnet ist, wobei die Aufforderung den Hinweis auf die personifizierte Transformationsvorschrift und einen Hinweis auf den Dienstanbieter umfasst;
Empfangen (307) des transformierten biometrischen Merkmals der zu identifizierenden Person von der Identifikationsvorrichtung (200) durch den Identifikationsserver (100); und
Vergleichen (309) des empfangenen transformierten biometrischen Merkmals mit dem transformierten biometrischen Referenzmerkmal, welches der zu identifizierenden Person zugeordnet ist und dem Dienstanbieter zugeordnet ist, durch den Identifikationsserver (100), um die zu identifizierende Person zu identifizieren,

12. Verfahren (300) nach Anspruch 11, wobei der Hinweis auf die personifizierte Transformationsvorschrift die personifizierte Transformationsvorschrift oder ausschließlich eine Bezeichnung der Transformationsvorschrift ist.

13. Verfahren (300) nach Anspruch 11 oder 12, wobei die personifizierte Transformationsvorschrift, welche der zu identifizierenden Person zugeordnet ist, eine der folgenden Transformationsvorschriften ist: asymmetrische Verschlüsselung unter Verwendung eines kryptografischen Schlüssels, welcher der zu identifizierenden Person zugeordnet ist, digitale Signierung unter Verwendung eines kryptographischen Signaturschlüssels, welcher der zu identifizierenden Person zugeordnet ist, eine digitale Codierungsvorschrift, insbesondere ein digitaler Code, wie ein RS-Code oder ein Huffmann-Code, welcher der zu identifizierenden Person zugeordnet ist, eine Scrambling-Vorschrift, eine digitale Modulationsvorschrift, welche der zu identifizierenden Person zugeordnet ist, oder eine Template Protection Transformationsvorschrift.

14. Verfahren (300) nach einem der Ansprüche 11 bis 13, mit:
bei einer Übereinstimmung des empfangenen transformierten biometrischen Merkmals mit dem transformierten biometrischen Referenzmerkmal,
Aussenden eines Identifikationssignals über das Kommunikationsnetzwerk, insbesondere an einen Dienstserver eines Dienstanbieters, um eine Identifikation der zu identifizierenden Person anzuzeigen, oder
Ausführen eines elektronischen Dienstes.

15. Verfahren (300) nach einem der Ansprüche 11 bis 14, wobei der Identifikationsserver (100) ein elD-Server oder ein Dienstserver eines Dienstanbieters ist, welcher einen elektronischen Dienst ausführt, und wobei die Identifikationsvorrichtung (200) ein Kommunikationsgerät der zu identifizierenden Person oder ein Personalausweis der zu identifizierenden Person mit einem elektronischen Chip ist, in welchem die personifizierte Transformationsvorschrift gespeichert ist.

16. Verfahren (400) zur Identifizierung einer zu identifizierenden Person gegenüber einem Dienstanbieter unter Verwendung eines biometrischen Merkmals der zu identifizierenden Person mittels einer Identifikationsvorrichtung (200), mit:
Empfangen (401) einer Dienstanbieterkennung des Dienstanbieters;
Auswählen (403) einer Transformationsvorschrift, welche dem Dienstanbieter zugeordnet ist, aus einer Mehrzahl von Transformationsvorschriften, welche unterschiedlichen Dienstanbietern zugeordnet sind, wobei jede Transformationsvorschrift eine Dienstanbieter spezifische Transformation des biometrischen Merkmals der zu identifizierenden Person bewirkt;
Transformieren (405) des biometrischen Merkmals der zu identifizierenden Person mittels der ausgewählten Transformationsvorschrift in ein transformiertes biometrisches Merkmal der zu identifizierenden Person; und
Ausgeben (407) des transformierten biometrischen Merkmals,
mit:
Aussenden des transformierten biometrischen Merkmals an einen Identifikationsserver (100).

17. Verfahren (400) nach Anspruch 16, mit:
Empfangen des biometrischen Merkmals über eine Kommunikationsschnittstelle (205) der Identifikationsvorrichtung (200); oder
Erfassen des biometrischen Merkmals mittels der Identifikationsvorrichtung (200).

18. Verfahren (400) nach Anspruch 16 oder 17, wobei die Identifikationsvorrichtung (200) ein Smartphone ist oder wobei die Identifikationsvorrichtung (200) ein Identifikationsdokument mit einem elektronischen Chip ist.

## Claims

1. An identification server (100) for identifying a person to be identified, the identification server comprising:
a memory (101) for providing a plurality of personal data records which are assigned to different persons, wherein each personal data record comprises a biometric reference feature of a person transformed by means of a personalized transformation rule;
a communication interface (105) for receiving a person identifier and a service provider identifier via a communication network, wherein the person identifier is associated with the person to be identified and the service provider identifier is associated with a service provider; and
a processor (103) configured to read out from the memory (101) an indication of the personalized transformation rule, which is assigned to the person to be identified and the service provider, based on the received person identifier and the service provider identifier;
wherein the communication interface (105) is configured to send out a request for the transmission of a biometric feature of the person to be identified, transformed by means of the personalized transformation rule assigned to the service provider, via the communication network, wherein the request comprises the indication of the personalized transformation rule and an indication of the service provider, wherein the communication interface (105) is further configured to receive the transformed biometric feature of the person to be identified via the communication network; and
wherein the processor (103) is configured to compare the received transformed biometric feature with the transformed biometric reference feature which is assigned to the person and the service provider in order to identify the person to be identified in relation to the service provider.

2. The identification server (100) according to claim 1, wherein the indication of the personalized transformation rule is the personalized transformation rule or exclusively a designation of the transformation rule.

3. The identification server (100) according to claim 1 or 2, wherein the personalized transformation rule, which is assigned to the person to be identified, is one of the following transformation rules: asymmetric encryption using a cryptographic key which is assigned to the person to be identified, digital signature using a cryptographic signature key, which is assigned to the person to be identified, a digital coding rule, in particular a digital code, such as an RS code or a Huffmann code, which is assigned to the person to be identified, a scrambling rule, a digital modulation rule which is assigned to the person to be identified, or a template protection transformation rule.

4. The identification server (100) according to one of the preceding claims, wherein each personal data record comprises a number of transformed biometric reference features which are assigned to the same person and different service providers, wherein each transformed biometric reference feature of the number of transformed biometric reference features is assigned to a service provider of a number of service providers.

5. The identification server (100) according to claim 4, wherein each transformed biometric reference feature of the number of transformed biometric reference features results from a transformation of a biometric reference feature of the person by means of a transformation rule, which is assigned to the person and a service provider, in particular exactly one service provider.

6. The identification server (100) according to one of the preceding claims, wherein the processor (103) is configured, if the received transformed biometric feature matches the transformed biometric reference feature, to instruct the communication interface (105) for sending an identification signal indicating an identification of the person to be identified via the communication network, in particular to a service server of a service provider, or wherein the processor (103) is configured to carry out an electronic service, if the received transformed biometric feature matches the transformed biometric reference feature.

7. The identification server (100) according to one of the preceding claims, which is an elD server or a service server of a service provider.

8. An identification device (200) for identifying a person to be identified towards a service provider by using a biometric feature of the person to be identified, the identification device comprising:
a communication interface (205) configured to receive a service provider identification of the service provider;
a memory (201) configured to provide a plurality of personalized transformation rules which are assigned to the person to be identified and different service providers, wherein each personalized transformation rule causes a service provider-specific transformation of the biometric feature; and
a processor (203) configured to read out a personalized transformation rule assigned to the service provider from the memory (201) and to transform the biometric feature of the person to be identified into a transformed biometric feature of the person by means of the read-out transformation rule;
wherein the communication interface (205) is configured to output the transformed biometric feature,
wherein the communication interface (205) is configured to send the transformed biometric feature to an identification server (100) via a communication network.

9. The identification device (200) according to claim 8, wherein the communication interface (205) is configured to receive the biometric feature, or wherein the identification device (200) comprises a further communication interface for receiving the biometric feature or wherein the identification device (200) comprises a biometric detection device for detection of the biometric feature.

10. The identification device (200) according to claim 8 or 9, wherein the identification device (200) is a smartphone or wherein the identification device (200) is an identification document having an electronic chip, wherein the electronic chip implements the communication interface (205), the memory (201) and the processor (203).

11. A method (300) for identifying a person to be identified by means of an identification server (100), wherein the identification server (100) provides a plurality of personal data records which are assigned to different persons, wherein each personal data record comprises a biometric reference feature of a person transformed by means of a personalized transformation rule, wherein each transformed biometric reference feature is assigned to the respective person and at least one service provider, or wherein each personal data record comprises a number of transformed biometric reference features which are assigned to the same person and different service providers, wherein each transformed biometric reference feature of the number of transformed biometric reference features is assigned to a service provider, or wherein each transformed biometric reference feature of the number of transformed biometric reference features results from a transformation of a biometric reference feature of the person by means of a transformation rule, wherein each transformation rule is assigned to the person and a service provider, in particular exactly one service provider, the method comprising:
receiving (301) a person identifier together with a service provider identifier by the identification server (100) via a communication network, wherein the person identifier is assigned to the person to be identified;
selecting (303) an indication of a personalized transformation rule for the transformation of a biometric feature of the person to be identified on the basis of the received person identifier and the service provider identifier by the identification server (100), wherein the personalized transformation rule is assigned to the person to be identified and the service provider identified by means of the service provider identifier;
sending (305) out a request for the transmission of a biometric feature of the person to be identified, transformed by means of the personalized transformation rule assigned to the service provider, by the identification server (100) to an identification device (200) which is associated with the person to be identified, wherein the request comprises the indication of the personalized transformation rule and an indication of the service provider;
receiving (307) the transformed biometric feature of the person to be identified from the identification device (200) by the identification server (100); and
comparing (309) the received transformed biometric feature with the transformed biometric reference feature, which is assigned to the person to be identified and assigned to the service provider, by the identification server (100), in order to identify the person to be identified.

12. The method (300) according to claim 11, wherein the indication of the personalized transformation rule is the personalized transformation regulation or exclusively a designation of the transformation rule.

13. The method (300) according to claim 11 or 12, wherein the personalized transformation rule, which is assigned to the person to be identified, is one of the following transformation rules: asymmetric encryption using a cryptographic key which is assigned to the person to be identified, digital signature using a cryptographic signature key, which is assigned to the person to be identified, a digital coding rule, in particular a digital code, such as an RS code or a Huffmann code, which is assigned to the person to be identified, a scrambling rule, a digital modulation rule which is assigned to the person to be identified, or a template protection transformation rule.

14. The method (300) according to one of claims 11 to 13, comprising:
if the received transformed biometric feature matches the transformed biometric reference feature,
Sending an identification signal via the communication network, in particular to a service server of a service provider, in order to indicate an identification of the person to be identified, or
running an electronic service.

15. The method (300) according to any one of claims 11 to 14, wherein the identification server (100) is an elD server or a service server of a service provider that performs an electronic service, and wherein the identification device (200) is a communication device of the person to be identified or an identity card of the person to be identified, the identity card comprising an electronic chip in which the personalized transformation rule is stored.

16. A method (400) for identifying a person to be identified towards a service provider by using a biometric feature of the person to be identified by means of an identification device (200), the method comprising:
receiving (401) a service provider identifier of the service provider;
selecting (403) a transformation rule, which is assigned to the service provider, from a plurality of transformation rules, which are assigned to different service providers, wherein each transformation rule causes a service provider-specific transformation of the biometric feature of the person to be identified;
transforming (405) the biometric feature of the person to be identified into a transformed biometric feature of the person to be identified by using the selected transformation rule; and
outputting (407) the transformed biometric feature,
comprising:
sending the transformed biometric feature to an identification server (100).

17. The method (400) according to claim 16, comprising:
receiving the biometric feature via a communication interface (205) of the identification device (200); or
detecting the biometric feature using the identification device (200).

18. The method (400) according to claim 16 or 17, wherein the identification device (200) is a smartphone or wherein the identification device (200) is an identification document comprising an electronic chip.

## Revendications

1. Serveur d'identification (100) permettant d'identifier une personne à identifier, comprenant :
une mémoire (101) pour fournir une pluralité de jeux de données personnelles qui sont associés à différentes personnes, chaque jeu de données personnelles comprenant une caractéristique de référence biométrique transformée au moyen d'une règle de transformation personnalisée ;
une interface de communication (105) pour recevoir un identifiant personnel et un identifiant de fournisseur de service sur un réseau de communication, l'identifiant personnel étant associé à la personne à identifier et l'identifiant de fournisseur de service étant associé à un fournisseur de service ; et
un processeur (103) qui est réalisé pour extraire de la mémoire (101), à l'aide de l'identifiant personnel et de l'identifiant de fournisseur de service reçus, un renvoi à la règle de transformation personnalisée qui est associé à la personne à identifier et au fournisseur de service ;
dans lequel l'interface de communication (105) est réalisée pour émettre sur le réseau de communication une demande de transmission d'une caractéristique biométrique de la personne à identifier, transformée au moyen de la règle de transformation personnalisée et associée au fournisseur de service, la demande comprenant le renvoi à la règle de transformation personnalisée et un renvoi au fournisseur de service, l'interface de communication (105) étant en outre réalisée pour recevoir sur le réseau de communication la caractéristique biométrique transformée de la personne à identifier ; et
dans lequel le processeur (103) est réalisé pour comparer la caractéristique biométrique transformée reçue à la caractéristique de référence biométrique transformée qui est associée à la personne et au fournisseur de service afin d'identifier la personne à identifier par rapport au fournisseur de service.

2. Serveur d'identification (100) selon la revendication 1, dans lequel le renvoi à la règle de transformation personnalisée est la règle de transformation personnalisée ou exclusivement une désignation de la règle de transformation.

3. Serveur d'identification (100) selon la revendication 1 ou 2, dans lequel la règle de transformation personnalisée qui est associée à la personne à identifier est l'une des règles de transformation suivantes : un cryptage asymétrique utilisant une clé cryptographique qui est associée à la personne à identifier, une signature numérique utilisant une clé de signature cryptographique qui est associée à la personne à identifier, une règle de codage numérique, en particulier du code numérique, tel que du code RS ou du code Huffman qui est associé à la personne à identifier, une règle de brouillage, une règle de modulation numérique qui est associée à la personne à identifier, ou une règle de transformation de type « Template Protection ».

4. Serveur d'identification (100) selon l'une quelconque des revendications précédentes, dans lequel chaque jeu de données personnelles comprend un nombre de caractéristiques de référence biométriques transformées qui sont associées à la même personne et à différents fournisseurs de service, chaque caractéristique de référence biométrique transformée du nombre de caractéristiques de référence biométrique transformées étant associée à un fournisseur de service d'un nombre de fournisseurs de service.

5. Serveur d'identification (100) selon la revendication 4, dans lequel chaque caractéristique de référence biométrique transformée du nombre de caractéristiques de référence biométriques transformées ressort d'une transformation d'une caractéristique de référence biométrique de la personne au moyen d'une règle de transformation qui est associée à la personne et à un fournisseur de service, en particulier à exactement un fournisseur de service.

6. Serveur d'identification (100) selon l'une quelconque des revendications précédentes, dans lequel le processeur (103) est réalisé, en cas de concordance de la caractéristique biométrique transformée reçue avec la caractéristique de référence biométrique transformée, pour ordonner à l'interface de communication (105) d'émettre un signal d'identification qui indique une identification de la personne à identifier, sur le réseau de communication, en particulier à un serveur de service d'un fournisseur de service, ou dans lequel le processeur (103) est réalisé, en cas de concordance de la caractéristique biométrique transformée reçue avec la caractéristique de référence biométrique transformée, pour effectuer un service électronique.

7. Serveur d'identification (100) selon l'une quelconque des revendications précédentes, qui est un serveur eID ou un serveur de service d'un fournisseur de service.

8. Dispositif d'identification (200) permettant d'identifier une personne à identifier par rapport à un fournisseur de service en utilisant une caractéristique biométrique de la personne à identifier, comprenant :
une interface de communication (205) qui est réalisée pour recevoir un identifiant de fournisseur de service du fournisseur de service ;
une mémoire (201) qui est réalisée pour fournir une pluralité de règles de transformation personnalisées qui sont associées à la personne à identifier et à différents fournisseurs de service, chaque règle de transformation personnalisée provoquant une transformation de la caractéristique biométrique, spécifique à un fournisseur de service ; et
un processeur (203) qui est réalisé pour extraire de la mémoire (201) une règle de transformation personnalisée associée au fournisseur de service et pour transformer la caractéristique biométrique de la personne à identifier au moyen de la règle de transformation extraite en une caractéristique biométrique transformée de la personne ;
dans lequel l'interface de communication (205) est réalisée pour délivrer la caractéristique biométrique transformée,
dans lequel l'interface de communication (205) est réalisée pour émettre la caractéristique biométrique transformée sur un réseau de communication à un serveur d'identification (100).

9. Dispositif d'identification (200) selon la revendication 8, dans lequel l'interface de communication (205) est réalisée pour recevoir la caractéristique biométrique, ou le dispositif d'identification (200) présentant une interface de communication supplémentaire pour recevoir la caractéristique biométrique, ou le dispositif d'identification (200) comprenant un dispositif de détection biométrique pour détecter la caractéristique biométrique.

10. Dispositif d'identification (200) selon la revendication 8 ou 9, le dispositif d'identification (200) étant un smartphone ou le dispositif d'identification (200) étant un document d'identification doté d'une puce électronique, la puce électronique mettant en œuvre l'interface de communication (205), la mémoire (201) et le processeur (203).

11. Procédé (300) permettant d'identifier une personne à identifier au moyen d'un serveur d'identification (100), le serveur d'identification (100) fournissant une pluralité de jeux de données personnelles qui sont associés à différentes personnes, dans lequel chaque jeu de données personnelles comprend une caractéristique de référence biométrique transformée d'une personne, transformée au moyen d'une règle de transformation personnalisée, chaque caractéristique de référence biométrique transformée de la personne respective étant associée à au moins un fournisseur de service, ou dans lequel chaque jeu de données personnelles comprend un nombre de caractéristiques de référence biométriques transformées qui sont associées à la même personne et à différents fournisseurs de service, chaque caractéristique de référence biométrique transformée du nombre de caractéristiques de référence biométrique transformées étant associée à un fournisseur de service, ou dans lequel chaque caractéristique de référence biométrique transformée du nombre de caractéristiques de référence biométriques transformées ressort d'une transformation d'une caractéristique de référence biométrique de la personne au moyen d'une règle de transformation, chaque règle de transformation étant associée à la personne et à un fournisseur de service, en particulier à exactement un fournisseur de service, comprenant :
la réception (301) d'un identifiant personnel conjointement avec un identifiant de fournisseur de service par le serveur d'identification (100) sur un réseau de communication, l'identifiant personnel étant associé à la personne à identifier ;
la sélection (303) d'un renvoi à une règle de transformation personnalisée pour la transformation d'une caractéristique biométrique de la personne à identifier à l'aide de l'identifiant personnel reçu et de l'identifiant de fournisseur de service par le serveur d'identification (100), la règle de transformation personnalisée étant associée à la personne à identifier et au fournisseur de service identifié au moyen de l'identifiant de fournisseur de service ;
l'émission (305) d'une demande de transmission d'une caractéristique biométrique de la personne à identifier, transformée au moyen de la règle de transformation personnalisée et associée au fournisseur de service, par le serveur d'identification (100) à un dispositif d'identification (200) qui est associé à la personne à identifier, la demande comprenant le renvoi à la règle de transformation personnalisée et un renvoi au fournisseur de service ;
la réception (307) de la caractéristique biométrique transformée de la personne à identifier depuis le dispositif d'identification (200) par le serveur d'identification (100) ; et
la comparaison (309) de la caractéristique biométrique transformée reçue à la caractéristique de référence biométrique transformée qui est associée à la personne à identifier et au fournisseur de service par le serveur d'identification (100) pour identifier la personne à identifier.

12. Procédé (300) selon la revendication 11, dans lequel le renvoi à la règle de transformation personnalisée est la règle de transformation personnalisée ou exclusivement une désignation de la règle de transformation.

13. Procédé (300) selon la revendication 11 ou 12, dans lequel la règle de transformation personnalisée qui est associée à la personne à identifier est l'une des règles de transformation suivantes : un cryptage asymétrique utilisant une clé cryptographique qui est associée à la personne à identifier, une signature numérique utilisant une clé de signature cryptographique qui est associée à la personne à identifier, une règle de codage numérique, en particulier du code numérique, tel que du code RS ou du code Huffman, qui est associé à la personne à identifier, une règle de brouillage, une règle de modulation numérique qui est associée à la personne à identifier, ou une règle de transformation de type « Template Protection ».

14. Procédé (300) selon l'une quelconque des revendications 11 à 13, comprenant :
en cas de concordance de la caractéristique biométrique transformée reçue avec la caractéristique de référence biométrique transformée,
l'émission d'un signal d'identification sur le réseau de communication, en particulier à un serveur de service d'un fournisseur de service pour indiquer une identification de la personne à identifier, ou
l'exécution d'un service électronique.

15. Procédé (300) selon l'une quelconque des revendications 11 à 14, dans lequel le serveur d'identification (100) est un serveur eID ou un serveur de service d'un fournisseur de service qui effectue un service électronique, et dans lequel le dispositif d'identification (200) est un appareil de communication de la personne à identifier ou une pièce d'identité de la personne à identifier dotée d'une puce électronique sur laquelle est mémorisée la règle de transformation personnalisée.

16. Procédé (400) permettant d'identifier une personne à identifier par rapport à un fournisseur de service en utilisant une caractéristique biométrique de la personne à identifier au moyen d'un dispositif d'identification (200), comprenant :
la réception (401) d'un identifiant de fournisseur de service du fournisseur de service ;
la sélection (403) d'une règle de transformation qui est associée au fournisseur de service parmi une pluralité de règles de transformation qui sont associées à différents fournisseurs de service, chaque règle de transformation provoquant une transformation spécifique à un fournisseur de service de la caractéristique biométrique de la personne à identifier ;
la transformation (405) de la caractéristique biométrique de la personne à identifier au moyen de la règle de transformation sélectionnée en une caractéristique biométrique transformée de la personne à identifier ; et
la sortie (407) de la caractéristique biométrique transformée, comprenant :
l'émission de la caractéristique biométrique transformée à un serveur d'identification (100).

17. Procédé (400) selon la revendication 16, comprenant :
la réception de la caractéristique biométrique par l'intermédiaire d'une interface de communication (205) du dispositif d'identification (200) ; ou
la détection de la caractéristique biométrique au moyen du dispositif d'identification (200).

18. Procédé (400) selon la revendication 16 ou 17, dans lequel le dispositif d'identification (200) est un smartphone ou le dispositif d'identification (200) est un document d'identification doté d'une puce électronique.
